# EUROPÄISCHE PATENTSCHRIFT

(11) **EP 1 206 635 B1**
(45) Veröffentlichungstag und Bekanntmachung des Hinweises auf die Patenterteilung: **02.03.2005**
(21) Anmeldenummer: 00956083.0
(22) Anmeldetag: 19.07.2000
(51) Int. Cl.: F02D 41/40, F02D 35/00, F02D 41/30

(54) **VERFAHREN ZUM BETREIBEN EINER BRENNKRAFTMASCHINE**
METHOD FOR OPERATING AN INTERNAL COMBUSTION ENGINE
PROCEDE POUR FAIRE FONCTIONNER UN MOTEUR A COMBUSTION INTERNE

(30) Priorität: 31.07.1999 DE 19936202
(43) Veröffentlichungstag der Anmeldung: 22.05.2002
(73) Patentinhaber: ROBERT BOSCH GMBH, 70442 Stuttgart (DE)
(72) Erfinder: BOERKEL, Wolfgang, D-71701 Schwieberdingen (DE)
(86) Internationale Anmeldenummer: PCT/DE2000/002350
(87) Internationale Veröffentlichungsnummer: WO 2001/009501

(56) Entgegenhaltungen:
- EP-A- 0 893 593
- PATENT ABSTRACTS OF JAPAN vol. 1999, no. 10, 31. August 1999 (1999-08-31) & JP 11 132097 A (NISSAN MOTOR CO LTD), 18. Mai 1999 (1999-05-18)
- PATENT ABSTRACTS OF JAPAN vol. 1999, no. 08, 30. Juni 1999 (1999-06-30) & JP 11 062731 A (NISSAN MOTOR CO LTD), 5. März 1999 (1999-03-05)
- PATENT ABSTRACTS OF JAPAN vol. 017, no. 294 (M-1424), 7. Juni 1993 (1993-06-07) & JP 05 018295 A (MAZDA MOTOR CORP), 26. Januar 1993 (1993-01-26)
- PATENT ABSTRACTS OF JAPAN vol. 1999, no. 05, 31. Mai 1999 (1999-05-31) & JP 11 036998 A (NISSAN MOTOR CO LTD), 9. Februar 1999 (1999-02-09)
- PATENT ABSTRACTS OF JAPAN vol. 1998, no. 05, 30. April 1998 (1998-04-30) & JP 10 018890 A (UNISIA JECS CORP), 20. Januar 1998 (1998-01-20)
- PATENT ABSTRACTS OF JAPAN vol. 016, no. 328 (M-1281), 16. Juli 1992 (1992-07-16) & JP 04 094444 A (TOYOTA MOTOR CORP), 26. März 1992 (1992-03-26)

## Beschreibung

### Stand der Technik

Die Erfindung betrifft ein Verfahren zum Betreiben einer Brennkraftmaschine insbesondere eines Kraftfahrzeugs bzw. eine Brennkraftmaschine nach dem Oberbegriff des Anspruchs 1 bzw. 8. Ebenfalls betrifft die Erfindung ein Steuergerät für eine Brennkraftmaschine insbesondere eines Kraftfahrzeugs sowie eine Brennkraftmaschine insbesondere für ein Kraftfahrzeug.

Ein derartiges Verfahren, ein derartiges Steuergerät und eine derartige Brennkraftmaschine sind beispielsweise bei einer sogenannten Benzin-Direkteinspritzung bekannt.

So ist in der EP-A-893 593 eine direkteinspritzende Brennkraftmaschine mit Tankentlüftung offenbart, bei der das Luft/Kraftstoffverhältnis bei einem großen Einfluss der Tankentlüftung korrigiert wird.

Bei einer Benzin-Direkteinspritzung wird der Kraftstoff in einem Homogenbetrieb während der Ansaugphase oder in einem Schichtbetrieb während der Verdichtungsphase in den Brennraum der Brennkraftmaschine eingespritzt. Der Homogenbetrieb ist vorzugsweise für den Vollastbetrieb der Brennkraftmaschine vorgesehen, während der Schichtbetrieb für den Leerlauf- und Teillastbetrieb geeignet ist. Beispielsweise in Abhängigkeit von dem angeforderten Drehmoment wird bei einer derartigen direkteinspritzenden Brennkraftmaschine zwischen den genannten Betriebsarten umgeschaltet.

Im Homogenbetrieb kann über eine Tankentlüftung ein Luft/Kraftstoff-Gemisch dem Brennraum zugeführt werden. Da die über die Drosselklappe angesaugte Luft und die direkt während der Ansaugphase in den Brennraum eingespritzte Kraftstoffmasse bis zur Entzündung homogen verwirbelt werden, entsteht insgesamt ein homogenes Gemisch in dem Brennraum. Das Lambda des Luft/Kraftstoff-Gemischs in dem Brennraum kann damit über eine Lambda-Regelung auf einen Sollwert gesteuert und/oder geregelt werden.

Auf diese Weise kann über eine derartige Tankentlüftung im Homogenbetrieb ein mit Kraftstoff aufgeladenes Aktivkohlefilter wieder entladen werden. Der in einem Kraftstofftank verdunstende Kraftstoff kann damit über die Tankentlüftung verwertet werden. Eine derartige Entladung nimmt jedoch eine relativ lange Zeitdauer in Anspruch. Dies hat zur Folge, dass die Brennkraftmaschine nur noch kurz in dem kraftstoffsparenden Schichtbetrieb betrieben werden kann.

Im Schichtbetrieb besteht die Gefahr, dass das über die Drosselklappe und die Tankentlüftung zusätzlich angesaugte Luft/Kraftstoff-Gemisch aufgrund seines geringen Kraftstoffanteils nicht entzündet wird, so dass unverbrannter Kraftstoff in die Umwelt abgegeben wird.

Aufgabe der Erfindung ist es, ein Verfahren zum Betreiben einer Brennkraftmaschine zu schaffen, mit dem ein möglichst geringer Kraftstoffverbrauch bei gleichzeitig möglichst geringer Abgabe von unverbranntem Kraftstoff an die Umwelt erreichbar ist.

Diese Aufgabe wird bei einem Verfahren bzw. einer Brennkraftmaschine der eingangs genannten Art erfindungsgemäß durch die Merkmale des kennzeichnenden Teils des Anspruchs 1 bzw. 8 gelöst. Bei einem Steuergerät und eine Speichermedium bzw Computerprogramm der jeweils eingangs genannten Art wird die Aufgabe entsprechend gelöst.

Durch den im Schichtbetrieb zusätzlich eingespritzten und entzündeten Kraftstoff entsteht eine sogenannte Fackelzündung. Diese entzündet das magere, über die Drosselklappe und über das Tankentlüftungsventil angesaugte Luft/Kraftstoff-Gemisch.

Dabei sollte das über die Drosselklappe und die Tankentlüftung angesaugte Luft/Kraftstoff-Gemisch möglichst mager sein. Eine Entflammbarkeit durch den Zündfunken ist nicht erforderlich. Gleichzeitig sollte das Luft/Kraftstoff-Gemisch jedoch so fett sein, dass es, wenn es durch die Fackel entzündet ist, durchbrennt. Dazu werden die Drosselklappe und das Tankentlüftungsventil entsprechend eingestellt.

Der Beladungsgrad des Aktivkohlefilters wird durch kurze Probeentlüftungen sowie durch deren Auswirkungen auf das Lambda des Abgases ermittelt. Dabei sollten die Probeentlüftungen möglichst im Homogenbetrieb stattfinden, da hier das Lambda des Abgases am genauesten bestimmt werden kann.

Im Hinblick auf den Wirkungsgrad der Brennkraftmaschine wird eine möglichst geringe Androsselung eingestellt.

Gegebenenfalls müssen das Tankentlüftungsventil und das Aktivkohlefilter größer als üblich dimensioniert werden, um die benötigten Kraftstoffmengen liefern zu können. Aus denselben Gründen ist eine Entlüftung auch erst ab einem gewissen Füllstand des Aktivkohlefilters sinnvoll.

Insgesamt wird damit die Möglichkeit eröffnet, dass nicht nur im Homogenbetrieb, sondern auch im Schichtbetrieb die Tankentlüftung eingesetzt wird. Die vollständige Verbrennung des über die Tankentlüftung zugeführten Luft/Kraftstoff-Gemischs wird dabei durch die zusätzlich direkt eingespritzte und entzündete Kraftstoffmasse gewährleistet. Es entsteht damit kein unverbrannter Kraftstoff, der die Umwelt gefährden würde.

Gleichzeitig kann der Wirkungsgrad der Brennkraftmaschine im Schichtbetrieb durch das über die Tankentlüftung zusätzlich zugeführte Luft/Kraftstoff-Gemisch verbessert werden. Der Schichtbetrieb kann aufgrund des über die Tankentlüftung zusätzlich angesaugten Luft/Kraftstoff-Gemischs zur Erzeugung eines größeren Moments eingesetzt werden. Damit muss seltener auf den kraftstoffaufwendigeren Homogenbetrieb umgeschaltet werden.

Ebenfalls wird durch den Betrieb der Tankentlüftung auch im Schichtbetrieb erreicht, dass die gesamte Tankentlüftung leistungsfähiger wird und mehr verdunsteter Kraftstoff als bisher einer Verbrennung zugeführt werden kann. Dies stellt eine weitere Kraftstoffeinsparung bei gleichzeitiger Verminderung der erzeugten Schadstoffe dar.

Es versteht sich, dass der erfindungsgemäße Einsatz der Tankentlüftung im Schichtbetrieb kombiniert werden kann mit dem bekannten Einsatz der Tankentlüftung im Homogenbetrieb.

Erfindungsgemäß wird die Masse des zusätzlich eingespritzten Kraftstoffs in Abhängigkeit von der insgesamt einzuspritzenden Kraftstoffmasse und von der Masse des in dem mageren, über die Drosselklappe und über die Tankentlüftung angesaugten Luft/Kraftstoff-Gemischs enthaltenen Kraftstoffs ermittelt.

Damit wird gewährleistet, dass das von der Brennkraftmaschine erzeugte Moment durch das Steuergerät genau auf das erwünschte Moment gesteuert und/oder geregelt werden kann. Dabei berücksichtigt das Steuergerät einerseits das aus dem Luft/Kraftstoff-Gemisch resultierende Moment, wie auch das aus der direkt eingespritzten Kraftstoffmasse resultierende Moment.

Bei einer vorteilhaften Ausgestaltung der Erfindung wird die insgesamt eingespritzte Kraftstoffmasse aus der Masse des in dem mageren, über die Tankentlüftung angesaugten Luft/Kraftstoff-Gemischs enthaltenen Kraftstoffs und der Masse des zusätzlich eingespritzten Kraftstoffs zusammengesetzt.

Bei einer vorteilhaften Weiterbildung der Erfindung wird, wenn das magere Luft/Kraftstoff-Gemisch alleine zündfähig ist, kein zusätzlicher Kraftstoff eingespritzt. Dies stellt einen homogenen Magerbetrieb der Brennkraftmaschine dar, der allein über die Tankentlüftung erreicht wird.

Der Wirkungsgrad der Brennkraftmaschine ist dabei zwar schlechter als im Schichtbetrieb, aber es ist in dem homogenen Magerbetrieb möglich, das Aktivkohlefilter zu regenerieren, ohne in den vom Wirkungsgrad noch schlechteren Lambda-gleich-Eins-Betrieb umzuschalten. Dies ist insbesondere vorteilhaft, wenn z.B. längere Zeit bei sehr niedrigen Lasten und hohen Außentemperaturen gefahren wurde und das Aktivkohlefilter überzulaufen droht, da in diesem Fall im Schichtbetrieb ohne Androsselung keine Tankentlüftung wegen des dann zusätzlich erzeugten Moments möglich ist.

Eine weitere Möglichkeit besteht darin, im Schichtbetrieb mit Fackelzündung die Drosselklappe und das Tankentlüftungsventil nur teilweise zu öffnen und somit in einen gedrosselten Betrieb überzugehen.

Da jedoch beide beschriebenen Möglichkeiten schlechter als der ungedrosselte Schichtbetrieb sind, sollten sie nur im beschriebenen Ausnahmezustand eingesetzt werden.

Besonders vorteilhaft ist es dabei, wenn zur Beeinflussung des entstehenden Moments die Tankentlüftung und/oder die Drosselklappe gedrosselt werden. Damit wird ein Anstieg des von der Brennkraftmaschine erzeugten Moments über das von einem Fahrer erwünschte Moment verhindert.

Eine weitere Möglichkeit, das Aktivkohlefilter schnell zu regenerieren, ergibt sich im Homogenbetrieb während der Ausräumphasen eines NOx-Speicherkatalysators. Während dieser Ausräumphasen sollte mit Lambda gleich Eins gefahren werden. Die Anfettung kann dann mit Hilfe des Kraftstoffs der Tankentlüftung erfolgen. Dabei kann das zusätzlich über das Einspritzventil erzeugte Luft/Kraftstoff-Gemisch sogar mager sein.

Von besonderer Bedeutung ist die Realisierung des erfindungsgemäßen Verfahrens in der Form eines Steuerelements, das für ein Steuergerät einer Brennkraftmaschine, insbesondere eines Kraftfahrzeugs, vorgesehen ist. Dabei ist auf dem Steuerelement ein Programm abgespeichert, das auf einem Rechengerät, insbesondere auf einem Mikroprozessor, ablauffähig und zur Ausführung des erfindungsgemäßen Verfahrens geeignet ist. Als Steuerelement kann insbesondere ein elektrisches Speichermedium zur Anwendung kommen, beispielsweise ein Read-Only-Memory oder ein Flash-Memory.

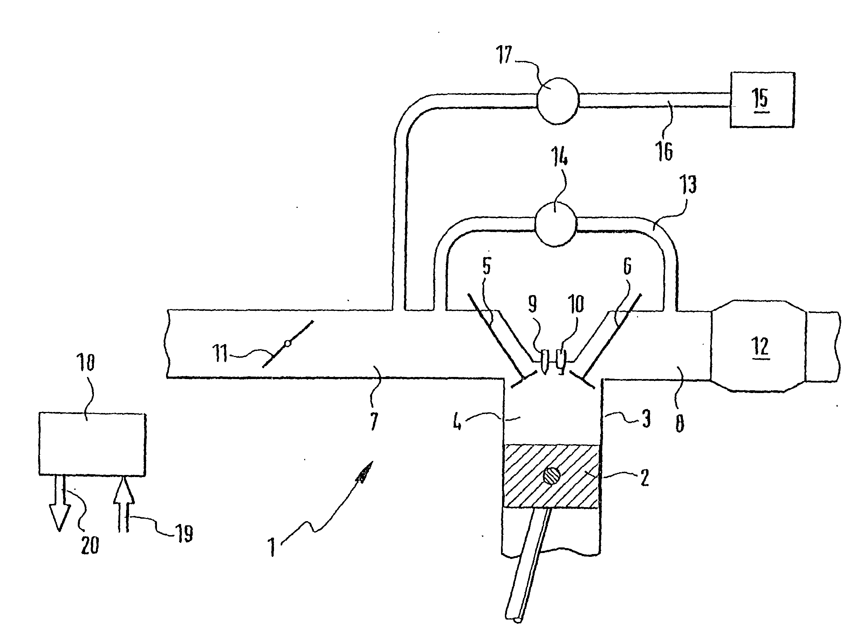

Weitere Anwendungsmöglichkeiten und Vorteile der Erfindung ergeben sich aus der nachfolgenden Beschreibung von Ausführungsbeispielen der Erfindung, die der Zeichnung dargestellt sind.

Die einzige Figur der Zeichnung zeigt eine schematische Darstellung eines Ausführungsbeispiels einer erfindungsgemäßen Brennkraftmaschine.

In der Figur ist eine Brennkraftmaschine 1 eines Kraftfahrzeugs dargestellt, bei der ein Kolben 2 in einem Zylinder 3 hin- und herbewegbar ist. Der Zylinder 3 ist mit einem Brennraum 4 versehen, der unter anderem durch den Kolben 2, mindestens ein Einlassventil 5 und mindestens ein Auslassventil 6 begrenzt ist. Mit dem Einlassventil 5 ist ein Ansaugrohr 7 und mit dem Auslassventil 6 ist ein Abgasrohr 8 gekoppelt.

Im Bereich des Einlassventils 5 und des Auslassventils 6 ragen ein Einspritzventil 9 und eine Zündkerze 10 in den Brennraum 4. Über das Einspritzventil 9 kann Kraftstoff in den Brennraum 4 eingespritzt werden. Mit der Zündkerze 10 kann der Kraftstoff in dem Brennraum 4 entzündet werden.

In dem Ansaugrohr 7 ist eine drehbare Drosselklappe 11 untergebracht, über die dem Ansaugrohr 7 Luft zuführbar ist. Die Menge der zugeführten Luft ist abhängig von der Winkelstellung der Drosselklappe 11. In dem Abgasrohr 8 ist ein Katalysator 12 untergebracht, der der Reinigung der durch die Verbrennung des Kraftstoffs entstehenden Abgase dient.

Der Kolben 2 wird durch die Verbrennung des Kraftstoffs in dem Brennraum 4 in eine Hin- und Herbewegung versetzt, die auf eine nicht-dargestellte Kurbelwelle übertragen wird und auf diese ein Drehmoment ausübt.

Ein Abgasrückführrohr 13 verbindet das Abgasrohr 8 und das Ansaugrohr 7. In dem Abgasrückführrohr 13 ist ein Abgasrückführventil 14 untergebracht. Insgesamt wird auf diese Weise eine Abgasrückführung realisiert. Die Abgasrückführung kann, muss jedoch nicht zwingend vorhanden sein.

Ein Aktivkohlefilter 15 ist über ein Tankentlüftungsrohr 16 mit dem Ansaugrohr 7 verbunden. In dem Tankentlüftungsrohr 16 ist ein Tankentlüftungsventil 17 untergebracht. Das Aktivkohlefilter 15 ist einem Kraftstofftank zugeordnet. Aus dem Kraftstofftank verdunsteter Kraftstoff wird in dem Aktivkohlefilter 15 aufgenommen und zwischengespeichert. Bei geöffnetem Tankentlüftungsventil 17 kann der zwischengespeicherte Kraftstoff über das Tankentlüftungsrohr 15 in das Ansaugrohr 7 angesaugt werden. Insgesamt ist auf diese Weise eine Tankentlüftung realisiert.

Ein Steuergerät 18 ist von Eingangssignalen 19 beaufschlagt, die mittels Sensoren gemessene Betriebsgrößen der Brennkraftmaschine 1 darstellen. Beispielsweise ist das Steuergerät 18 mit einem Luftmassensensor, einem Lambda-Sensor, einem Drehzahlsensor und dergleichen verbunden. Des Weiteren ist das Steuergerät 18 mit einem Fahrpedalsensor verbunden, der ein Signal erzeugt, das die Stellung eines von einem Fahrer betätigbaren Fahrpedals und damit das angeforderte Drehmoment angibt. Das Steuergerät 18 erzeugt Ausgangssignale 20, mit denen über Aktoren bzw. Steller das Verhalten der Brennkraftmaschine 1 beeinflusst werden kann. Beispielsweise ist das Steuergerät 18 mit dem Einspritzventil 9, der Zündkerze 10, der Drosselklappe 11 und dem Tankentlüftungsvenil 17 und dergleichen verbunden und erzeugt die zu deren Ansteuerung erforderlichen Signale.

Unter anderem ist das Steuergerät 18 dazu vorgesehen, die Betriebsgrößen der Brennkraftmaschine 1 zu steuern und/oder zu regeln. Beispielsweise wird die von dem Einspritzventil 9 in den Brennraum 4 eingespritzte Kraftstoffmasse von dem Steuergerät 18 insbesondere im Hinblick auf einen geringen Kraftstoffverbrauch und/oder eine geringe Schadstoffentwicklung gesteuert und/oder geregelt. Zu diesem Zweck ist das Steuergerät 18 mit einem Mikroprozessor versehen, der in einem Speichermedium, insbesondere in einem Flash-Memory ein Programm abgespeichert hat, das dazu geeignet ist, die genannte Steuerung und/oder Regelung durchzuführen.

In einer ersten Betriebsart, einem sogenannten Homogenbetrieb der Brennkraftmaschine 1, wird die Drosselklappe 11 in Abhängigkeit von dem erwünschten Drehmoment teilweise geöffnet bzw. geschlossen. Der Kraftstoff wird von dem Einspritzventil 9 während einer durch den Kolben 2 hervorgerufenen Ansaugphase in den Brennraum 4 eingespritzt. Durch die gleichzeitig über die Drosselklappe 11 angesaugte Luft wird der eingespritzte Kraftstoff verwirbelt und damit in dem Brennraum 4 im Wesentlichen gleichmäßig verteilt. Danach wird das Kraftstoff/Luft-Gemisch während der Verdichtungsphase verdichtet, um dann von der Zündkerze 10 entzündet zu werden. Durch die Ausdehnung des entzündeten Kraftstoffs wird der Kolben 2 angetrieben. Das entstehende Drehmoment hängt im Homogenbetrieb unter anderem von der Stellung der Drosselklappe 11 ab. Im Hinblick auf eine geringe Schadstoffentwicklung wird das Kraftstoff/Luft-Gemisch möglichst auf Lambda gleich Eins eingestellt.

In dieser ersten Betriebsart ist es möglich, das Tankentlüftungsventil 17 zu öffnen und damit zusätzlich zu der direkt eingespritzten Kraftstoffmasse ein Luft/Kraftstoff-Gemisch aus dem Aktivkohlefilter 15 in den Brennraum 4 anzusaugen. Die in dem angesaugten Luft/Kraftstoff-Gemisch enthaltene Kraftstoffmasse kann von dem Steuergerät 18 über Veränderungen von Lambda, die über den Lambda-Sensor erfasst werden, ermittelt und damit bei der Bestimmung der direkt eingespritzten Kraftstoffmasse berücksichtigt werden.

In einer zweiten Betriebsart, einem sogenannten Schichtbetrieb der Brennkraftmaschine 1, wird die Drosselklappe 11 weit geöffnet. Der Kraftstoff wird von dem Einspritzventil 9 während einer durch den Kolben 2 hervorgerufenen Verdichtungsphase in den Brennraum 4 eingespritzt, und zwar örtlich in die unmittelbare Umgebung der Zündkerze 10 sowie zeitlich in geeignetem Abstand vor dem Zündzeitpunkt. Dann wird mit Hilfe der Zündkerze 10 der Kraftstoff entzündet, so dass der Kolben 2 in der nunmehr folgenden Arbeitsphase durch die Ausdehnung des entzündeten Kraftstoffs angetrieben wird. Das entstehende Drehmoment hängt im Schichtbetrieb weitgehend von der eingespritzten Kraftstoffmasse ab. Im Wesentlichen ist der Schichtbetrieb für den Leerlaufbetrieb und den Teillastbetrieb der Brennkraftmaschine 1 vorgesehen.

Vorzugsweise in der ersten Betriebsart, aber gegebenenfalls auch in der zweiten Betriebsart wird der Beladungszust and des Aktivkohlefilters 15 immer wieder überprüft. Hierzu wird das Tankentlüftungsventil 17 kurzzeitig geöffnet und die daraus resultierende Veränderung von Lambda mittels des Lambda-Sensors erfasst. Daraus kann von dem Steuergerät 18 diejenige Kraftstoffmasse ermittelt werden, die aus dem Aktivkohlefilter 15 als Luft/Kraftstoff-Gemisch ansaugbar ist.

Überschreitet das Aktivkohlefilter 15 einen vorgebbaren Beladungszustand, so wird das Tankentlüftungsventil 17 geöffnet. Gleichzeitig wird die Drosselklappe 11 derart angesteuert, dass insgesamt über das Tankentlüftungsventil 17 und die Drosselklappe 11 ein mageres Luft/Kraftstoff-Gemisch in den Brennraum 4 angesaugt wird. Dieses magere Luft/Kraftstoff-Gemisch verteilt sich in dem Brennraum 4 weitgehend gleichmäßig und damit homogen. Das daraufhin in dem Brennraum 4 vorhandene Luft/Kraftstoff-Gemisch kann derart mager sein, dass es für sich allein gesehen durch einen Zündfunken nicht entzündbar ist.

Es wird dann über das Einspritzventil 9 eine zusätzliche Kraftstoffmasse in den Brennraum 4 direkt eingespritzt. Diese Kraftstoffmasse wird möglichst klein gewählt. Sie ist abhängig von der Kraftstoffmasse, die in dem über das Tankentlüftungsventil 17 angesaugten Luft/Kraftstoff-Gemisch enthalten ist, und der von dem Steuergerät 18 ermittelten gesamten einzuspritzenden bzw. zuzuführenden Kraftstoffmasse, die zur Erzeugung des erwünschten Moments erforderlich ist.

Die über das Einspritzventil 9 zusätzlich direkt eingespritzte Kraftstoffmasse wird von der Zündkerze 10 entzündet. Es entsteht eine sogenannte Fackelzündung. Durch diese Fackelzündung wird dann das magere Luft/Kraftstoff-Gemisch, das aus dem Aktivkohlefilter 15 in den Brennraum 4 angesaugt worden ist, ebenfalls entzündet.

Das von der Brennkraftmaschine 1 erzeugte Moment setzt sich damit aus demjenigen Moment zusammen, das aus dem mageren Luft/Kraftstoff-Gemisch resultiert, das aus dem Aktivkohlefilter 15 angesaugt worden ist, sowie aus demjenigen Moment, das aus derjenigen Kraftstoffmasse resultiert, die zusätzlich direkt in den Brennraum 4 eingespritzt worden ist. Die beschriebene Betriebsweise der Brennkraftmaschine 1 kann damit erst dann eingesetzt werden, wenn die Brennkraftmaschine 1 ein Moment anfordert, das größer ist als das aus dem mageren Luft/Kraftstoff-Gemisch resultierende Moment.

Die nachfolgend beschriebenen Betriebsarten der Brennkraftmaschine 1 sind im Hinblick auf den Wirkungsgrad weniger vorteilhaft als die vorstehend beschriebene Betriebsart. Die nachfolgenden Betriebsarten sind deshalb nur dann vorgesehen, wenn die vorstehend beschriebene Betriebsart aufgrund einer sehr niedrigen, an der Brennkraftmaschine 1 anliegenden Last und aufgrund eines vollen Aktivkohlefilters 15 nicht durchgeführt werden können.

Falls die Brennkraftmaschine 1 beispielsweise sehr lange bei einer sehr niedrigen Last betrieben worden ist, und falls das Aktivkohlefilter 15 z.B. nach einer längeren Standzeit bei höheren Temperaturen überzulaufen droht, so ist es möglich, durch eine entsprechende Stellung des Tankentlüftungsventils 17 ein homogenes mageres Luft/Kraftstoff-Gemisch allein mit Hilfe der Tankentlüftung und der Luft über die Drosselklappe 11 in dem Brennraum 4 bereitzustellen. Gegebenenfalls ist dann dieses aus dem Aktivkohlefilter 15 in den Brennraum 4 angesaugte magere Luft/Kraftstoff-Gemisch ohne eine zusätzlich direkt eingespritzte Kraftstoffmasse entzündbar. In diesem Fall wird keine Kraftstoffmasse zusätzlich eingespritzt und es wird das Luft/Kraftstoff-Gemisch direkt von der Zündkerze 10 entzündet. Dies stellt einen homogenen Magerbetrieb der Brennkraftmaschine 1 dar, der allein durch die Tankentlüftung realisiert wird.

Falls bei den beschriebenen Betriebsweisen der Brennkraftmaschine 1 ein größeres Moment entstehen sollte als angefordert wird, so kann über eine entsprechende Androsselung des Tankentlüftungsventils 17 und/oder der Drosselklappe 11 das erzeugte Moment auf den erwünschten Wert reduziert werden. Dies stellt einen gedrosselten Schichtbetrieb mit Fackelzündung dar. Damit kann die Entstehung eines unerwünschten überhöhten Moments sicher vermieden werden.

Der vorstehend beschriebene Einsatz der Tankentlüftung im Schichtbetrieb kann mit dem ebenfalls beschriebenen Einsatz der Tankentlüftung im Homogenbetrieb kombiniert werden.

Eine weiterer Einsatz der Tankentlüftung ist im Homogenbetrieb während der Ausräumphasen eines NOx-Speicherkatalysators möglich. Durch die zusätzliche Tankentlüftung wird in diesem Fall während des Homogenbetriebs eine Anfettung des Luft/Kraftstoff-Gemischs erreicht, die das genannte Ausräumen des NOx-Speicherkatalysators unterstützt.

## Patentansprüche

1. Verfahren zum Betreiben einer Brennkraftmaschine (1) insbesondere eines Kraftfahrzeugs, bei dem Luft über eine Drosselvorrichtung, insbesondere über eine Drosselklappe (11) in einen Brennraum (4) angesaugt wird, bei dem Kraftstoff in einer ersten Betriebsart während einer Ansaugphase oder in einer zweiten Betriebsart während einer Verdichtungsphase direkt von einem Einspritzventil (9) in den Brennraum (4) eingespritzt und von einer Zündkerze (10) entzündet wird, und bei dem ein Luft/Kraftstoff-Gemisch über eine Tankentlüftung (15, 16, 17) in den Brennraum (4) angesaugt wird, **dadurch gekennzeichnet, dass** in der zweiten Betriebsart über die Drosselklappe (11) und über die Tankentlüftung (15, 16, 17) ein mageres Luft/Kraftstoff-Gemisch in den Brennraum (4) angesaugt wird, dass die Masse des zusätzlich eingespritzten Kraftstoffs in Abhängigkeit von der insgesamt einzuspritzenden Kraftstoffmasse und von der Masse des in dem mageren, über die Drosselklappe (11) und über die Tankentlüftung (15, 16, 17) angesaugten Luft/Kraftstoff-Gemischs enthaltenen Kraftstoffs ermittelt wird, dass die Masse des aus der Tankentlüftung (15, 16, 17) ansaugbaren Kraftstoffs vorab ermittelt wird, und dass mittels in den Brennraum (4) zusätzlich eingespritzten und entzündeten Kraftstoffs das magere Luft/Kraftstoff-Gemisch entzündet wird.

2. Verfahren nach Anspruch 1, **dadurch gekennzeichnet, dass** die insgesamt eingespritzte Kraftstoffmasse aus der Masse des in dem mageren, über die Drosselklappe (11) und über die Tankentlüftung (15, 16, 17) angesaugten Luft/Kraftstoff-Gemischs enthaltenen Kraftstoffs und der Masse des zusätzlich eingespritzten Kraftstoffs zusammengesetzt wird.

3. Verfahren nach einem der Ansprüche 1 oder 2, **dadurch gekennzeichnet, dass**, wenn das magere Luft/Kraftstoff-Gemisch alleine zündfähig ist, kein zusätzlicher Kraftstoff eingespritzt wird.

4. Verfahren nach einem der Ansprüche 1 bis 3, **dadurch gekennzeichnet, dass** zur Beeinflussung des entstehenden Moments die Tankentlüftung (17) und/oder die Drosselklappe (11) gedrosselt werden.

5. Computerprogramm, **dadurch gekennzeichnet, dass** es zur Anwendung in einem Verfahren nach einem der vorhergehenden Ansprüche programmiert ist.

6. Elektrisches Speichermedium für ein Steuergerät (18) einer Brennkraftmaschine (1), **dadurch gekennzeichnet, dass** auf ihm ein Computerprogramm zur Anwendung in einem Verfahren nach einem der Ansprüche 1 bis 4 abgespeichert ist.

7. Steuergerät (18) für eine Brennkraftmaschine (1), **dadurch gekennzeichnet, dass** es zur Anwendung in einem Verfahren nach einem der Ansprüche 1 bis 4 hergerichtet ist.

8. Brennkraftmaschine (1) insbesondere für ein Kraftfahrzeug mit einem Brennraum (4), in den Luft über eine Drosselklappe (11) ansaugbar ist, in den Kraftstoff in einer ersten Betriebsart während einer Ansaugphase oder in einer zweiten Betriebsart während einer Verdichtungsphase direkt von einem Einspritzventil (9) einspritzbar und von einer Zündkerze (10) entzündbar ist, und in den ein Luft/Kraftstoff-Gemisch über eine Tankentlüftung (15, 16, 17) ansaugbar ist, und mit einem Steuergerät (18), **dadurch gekennzeichnet, dass** durch das Steuergerät (18) in der zweiten Betriebsart über die Drosselklappe (11) und über die Tankentlüftung (15, 16, 17) ein mageres Luft/Kraftstoff-Gemisch in den Brennraum (4) angesaugt wird, dass durch das Steuergerät (18) die Masse des zusätzlich eingespritzten Kraftstoffs in Abhängigkeit von der insgesamt einzuspritzenden Kraftstoffmasse und von der Masse des in dem mageren, über die Drosselklappe (11) und über die Tankentlüftung (15, 16, 17) angesaugten Luft/Kraftstoff-Gemischs enthaltenen Kraftstoffs ermittelt wird, dass durch das Steuergerät (18) die Masse des aus der Tankentlüftung (15, 16, 17) ansaugbaren Kraftstoffs vorab ermittelt wird, und dass durch das Steuergerät (18) mittels in den Brennraum (4) zusätzlich eingespritzten und entzündeten Kraftstoffs das magere Luft/Kraftstoff-Gemisch entzündet wird.

## Claims

1. Method for operating an internal combustion engine (1), in particular of a motor vehicle, in which air is sucked into a combustion chamber (4) via a throttle device, in particular via a throttle valve (11), in which fuel, in a first operating mode during an induction phase or in a second operating mode during a compression phase, is injected directly from an injection valve (9) into the combustion chamber (4) and is ignited by a spark plug (10), and in which a fuel/air mix is sucked into the combustion chamber (4) via a tank vent (15, 16, 17), **characterized in that** in the second operating mode a lean air/fuel mix is sucked into the combustion chamber (4) via the throttle valve (11) and via the tank vent (15, 16, 17), **in that** the mass of the additionally injected fuel is determined as a function of the total mass of fuel to be injected and of the mass of the fuel contained in the lean air/fuel mix sucked in via the throttle valve (11) and via the tank vent (15, 16, 17), **in that** the mass of fuel which can be sucked in from the tank vent (15, 16, 17) is determined in advance, and **in that** the lean air/fuel mix is ignited by means of fuel which is additionally injected into the combustion chamber (4) and ignited.

2. Method according to Claim 1, **characterized in that** the total mass of fuel injected is composed of the mass of fuel contained in the lean air/fuel mix sucked in via the throttle valve (11) and via the tank vent (15, 16, 17) and the mass of fuel which is additionally injected.

3. Method according to Claim 1 or 2, **characterized in that**, if the lean air/fuel mix can be ignited on its own, no additional fuel is injected.

4. Method according to one of Claims 1 to 3, **characterized in that**, to influence the torque which is produced, the tank vent (17) and/or the throttle valve (11) are throttled.

5. Computer program, **characterized in that** it is programmed for use in a method according to one of the preceding claims.

6. Electrical storage medium for a control unit (18) of an internal combustion engine (1), **characterized in that** a computer program for use in a method according to one of Claims 1 to 4 is stored on it.

7. Control unit (18) for an internal combustion engine (1), **characterized in that** it is designed for use in a method according to one of Claims 1 to 4.

8. Internal combustion engine (1), in particular for a motor vehicle, having a combustion chamber (4), into which air can be sucked via a throttle valve (11), into which fuel, in a first operating mode during an induction phase or in a second operating mode during a compression phase, can be injected directly by an injection valve (9) and can be ignited by a spark plug (10), and into which an air/fuel mix can be sucked via a tank vent (15, 16, 17) and having a control unit (18), **characterized in that** a lean air/fuel mix is injected into the combustion chamber (4) via the throttle valve (11) and via the tank vent (15, 16, 17) by the control unit (18) in the second operating mode, **in that** the control unit (18) determines the mass of additionally injected fuel as a function of the total mass of fuel to be injected and of the mass of the fuel contained in the lean air/fuel mix sucked in via the throttle valve (11) and via the tank vent (15, 16, 17), **in that** the control unit (18) determines the mass of fuel which can be sucked in from the tank vent (15, 16, 17), and **in that** the lean air/fuel mix is ignited by the control unit (18) by means of fuel which is additionally injected into the combustion chamber (4) and ignited.

## Revendications

1. Procédé de gestion d'un moteur à combustion interne (1), notamment d'un véhicule automobile, dans lequel de l'air est aspiré par un dispositif d'étranglement, notamment un clapet d'étranglement (11) dans une chambre de combustion (4), le carburant est injecté dans un premier mode de fonctionnement pendant une phase d'aspiration ou dans un deuxième mode de fonctionnement pendant une phase de compression, directement dans la chambre de combustion (4) par un injecteur (9) puis allumé par une bougie d'allumage (10), avec un mélange air/carburant aspiré par une purge de réservoir (15, 16, 17) dans la chambre de combustion (4),
**caractérisé en ce que**
dans le deuxième mode de fonctionnement un mélange air/carburant pauvre est aspiré dans la chambre de combustion (4) par le clapet d'étranglement (11) et la purge de réservoir (15, 16, 17),
la masse de carburant supplémentaire injectée est déterminée en fonction de la masse de carburant totale à injecter et de la masse de carburant contenue dans le mélange air/carburant pauvre aspiré par le clapet d'étranglement (11) et la purge de réservoir (15, 16, 17), en déterminant préalablement la masse de carburant pouvant être aspirée de la purge de réservoir (15, 16, 17), et
le mélange air/carburant pauvre est allumé au moyen du carburant supplémentaire injecté dans la chambre de combustion (4) et allumé.

2. Procédé selon la revendication 1,
**caractérisé en ce que**
la masse de carburant totale injectée est composée par la masse de carburant contenant le mélange air/carburant pauvre aspiré par le clapet d'étranglement (11) et la purge de réservoir (15, 16, 17) et la masse de carburant supplémentaire injectée.

3. Procédé selon l'une quelconque des revendications 1 ou 2,
**caractérisé en ce qu'**
aucun carburant supplémentaire n'est injecté si le mélange air/carburant pauvre est inflammable à lui seul.

4. Procédé selon l'une quelconque des revendications 1 à 3,
**caractérisé en ce que**
pour influencer le couple généré, la purge de réservoir (17) et/ou le clapet d'étranglement (11) sont étranglés.

5. Programme informatique,
**caractérisé en ce qu'**
il est programmé pour appliquer un procédé selon l'une quelconque des revendications précédentes.

6. Mémoire électrique pour un appareil de commande (18) d'un moteur à combustion interne (1),
**caractérisé en ce qu'**
il contient un programme informatique appliquant le procédé selon l'une quelconque des revendications 1 à 4.

7. Appareil de commande (18) pour un moteur à combustion interne (1),
**caractérisé en ce qu'**
il est conçu pour l'application du procédé selon l'une quelconque des revendications 1 à 4.

8. Moteur à combustion interne (1), notamment pour un véhicule automobile, avec une chambre de combustion (4) dans laquelle de l'air peut être aspiré par un clapet d'étranglement (11), le carburant est injecté dans un premier mode de fonctionnement pendant une phase d'aspiration ou dans un deuxième mode de fonctionnement pendant une phase de compression, directement par un injecteur (9) puis allumé par une bougie d'allumage (10), avec un mélange air/carburant aspiré par une purge de réservoir (15, 16, 17) et avec un appareil de commande (18),
**caractérisé en ce que**
par l'appareil de commande (18) dans le deuxième mode de fonctionnement, un mélange air/carburant pauvre est aspiré dans la chambre de combustion (4) par le clapet d'étranglement (11) et la purge de réservoir (15, 16, 17)
l'appareil de commande (18) détermine la masse de carburant supplémentaire injectée en fonction de la masse de carburant totale à injecter et de la masse de carburant contenue dans le mélange air/carburant pauvre aspiré par le clapet d'étranglement (11) et la purge de réservoir (15, 16, 17), en déterminant préalablement la masse de carburant aspirée de la purge de réservoir (15, 16, 17), et
l'appareil de commande (18) allume le mélange air/carburant pauvre au moyen du carburant supplémentaire injecté dans la chambre de combustion (4) et allumé.
